Europäisches Patentamt

**European Patent Office**

**Office européen des brevets**

(11) Publication number: **0 176 285**

A2

# (12) EUROPEAN PATENT APPLICATION

(21) Application number: **85306481.4**

(22) Date of filing: **12.09.85**

(51) Int. Cl.⁴: **B 65 G 65/48**
**A 01 C 15/16**

(30) Priority: **17.09.84 ZA 847304**

(43) Date of publication of application:
**02.04.86 Bulletin 86/14**

(84) Designated Contracting States:
**AT BE CH DE FR GB IT LI LU NL SE**

(71) Applicant: **PIONEER SEED CO. (PTY) LIMITED**
**Hildesheim Farm**
**Greytown Natal(ZA)**

(72) Inventor: **Bennie, John Edward**
**Wembley Farm Greytown**
**Natal(ZA)**

(72) Inventor: **Cockburn, Kevin N. A.**
**Dean's Farm Greytown**
**Natal(ZA)**

(74) Representative: **Massey, Alexander et al,**
**MARKS & CLERK Scottish Life House Bridge Street**
**Manchester, M3 3DP(GB)**

(54) **Dispenser for fluids.**

(57) A dispenser (10) for fluent material is made up of successive plates which comprise a cut off or regulatory plate (14), a first stationary plate (16) to which is fixed a shaft (18) having a bevel gear (20) at one end, a rotating intermediate member (22) and a second fixed plate (24). The plates (14, 16 and 24) each have four sector shaped cutouts (26) and the plate (22) has five such cutouts (28) through which material is dispensed on rotation of the member (22). The dispenser may be fed from a hopper with liquid or granular material.

FIG 1

## DISPENSER FOR FLUIDS

## FIELD OF THE INVENTION

This invention relates to a dispenser for fluent materials and in particular for granular material, powders or other fluent solid compositions.

## BACKGROUND OF THE INVENTION

A number of dispensers have been proposed to distribute particulate material such as fertiliser as the device containing the dispenser is moved. Usually a wheel of the device causes relative rotation of plates at the outlet of the hopper for the material, the plates having orifices which are in and out of register as rotation occurs, thereby allowing a controlled amount of the material to be dropped.

The most pertinent prior art revealed by a Standard Search Report of the European Patent Office comprises:
German Patent 2 444 285 (Wollner)
German Patent 2 731 798 (Chambon)
United States Patent 1 371 441 (Ruszczak)

Other patents relating to technological background were United States Patent 3 163 333 (Lindaberry), German Patent 2 461 696 (Phillipp) and French Patent 2 300 730 (Langen)

- 2 -                    0176285

German Patent 2 444 285 (Wollner) relates to a silo outlet having a plate having orifices in direct communication with the material in the hopper. The material drops through the orifices on to a second plate spaced away from the first plate and a wiper blade causes the material deposited on the lower plate to be transferred to a central opening through which it drops by gravity. In this way a predetermined measured amount of the material can be delivered.

In the patent to Chambon a series of three plates is provided. These are movable relatively to one another, the arrangement being that the orifices of the first plate register with those of the second plate when the latter are out of register with the orifices of the third (or lowermost) plate. Thus, the orifices in the second plate become full and further relative movement brings the orifice of the second plate into register with those of the third plate, the material falling through the latter orifices. Thus, an intermittent discharge of the material is obtained and while this may be satisfactory for certain purposes, it is not entirely satisfactory for all purposes.

It is an object of the present invention to provide a sequential discharge which results, particularly in respect of fertiliser, a very uniform spread which is highly desirable for many applications.

United States Patent 1 371 441 is not relevant as it relates to an onion planter and, as will become apparent on a reading of this specification. The principle of the discharge of the onions in the Ruszczak Patent is very different to that of the present invention.

## THE INVENTION

According to the invention a dispenser for fluent materials includes a first plate having a pluarity of orifices communicating with a hopper, a second plate having a plurality of orifices out of register with the orifices of the first plate and an intermediate member having a different number of orifice than the first or second plates, and which on relative movement of the member on the one hand and the two plates on the other hand, receive the material when one or more of its orifices registers completely or partially with one or more orifices of the first plate and discharge the material through one or more orifices of the second plate when in register therewith but out of register with any orifice in the first plate.

In a preferred form of the invention the first and second plates are fixed while the intermediate member is rotatable. Preferably the intermediate member has ports which are radially disposed on a circular member.

The first and second plates are preferably flat discs having sector shaped openings. The openings in the first plate are out of register with those of the second plate. This may be achieved by having a different configuration of the openings in the two plates or a different number of openings.

There are various arrangements of the orifices in the two plates and the intermediate member which will achieve the sequential discharge of the material. Firstly, the number of orifices in each of the plates may be different, or the number of orifices in the first and second plate may be greater or less than the number of openings in the intermediate member.

In a refinement of the invention a cut-off plate may be provided in association with the first plate. This cut off plate may have openings which may be arranged to obturate some or all of the openings in the first plate in order to adjust the flow of material through the first plate.

EMBODIMENT OF THE INVENTION

An embodiment of the invention is described below by way of example with reference to the accompanying drawings in which:

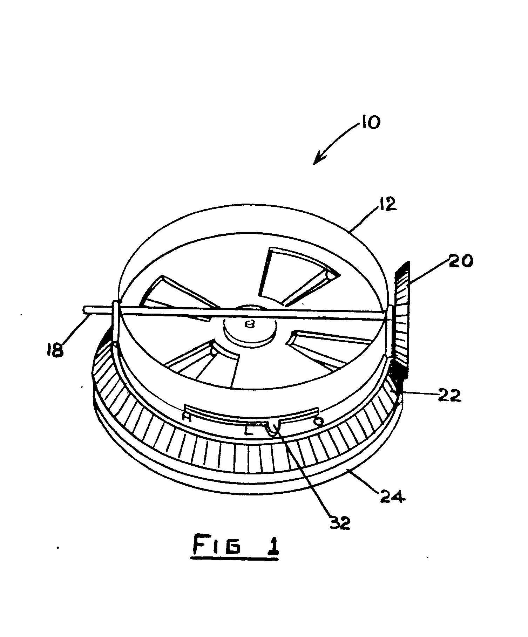

Figure 1 is a diagrammatic view of a dispenser according to the invention ;

and

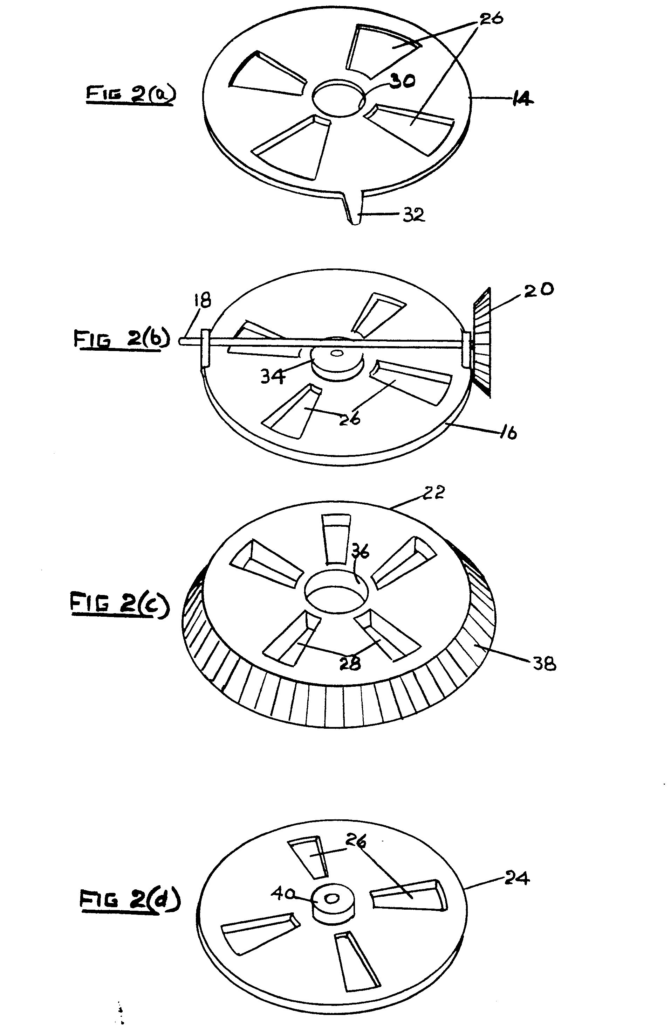

Figures 2 (a) to (d) illustrate an exploded view in diagrammatic form of a dispenser of Figure 1 with parts omitted for the sake of clarity.

Referring to the drawings a dispenser 10 has a ring 12 which forms part of a hopper (not seen in the drawings) for fluent material such as fertiliser. The dispenser 10 is an assembly of successive plates which comprise a cut off or regulating plate 14, a first stationary plate 16 to which is fixed a shaft 18 having a bevel gear 20 at one end, a rotating intermediate member 22, and a second fixed plate 24. The plates 14,16 and 24 each have four sector shaped cutouts 26 and the plate 22 has five such cutouts 28.

In an alternative form of the invention (not seen in the drawings) the shaft 18 may be located in the throat of the hopper separate from the top plate and journalled by suitable bearings.

The cut off plate 14 has a central aperture 30 and a radial projection 32 by means of which it can be rotated relatively to the first plate 16 in order to arrange complete, partial or no obturation of the openings 26 of the plate 16 depending on the rate desired of discharge of the fluent material . The ring 12 is marked with H (for high delivery), I (for low delivery) and 0 (for zero delivery). A boss 34 fixed centrally to the first stationary plate 16 passes through the aperture 30 of the cut off plate 14.

The rotating intermediate member 22 has a central aperture 36 and the peripheral circumferential edge of the member has bevel gear teeth 38. The aperture 36 receives a central boss 40 fixed on the plate 24.

The bevel gear teeth 38 meshes with the bevel gear 20 mounted on the stationary plate 16. A bolt (not seen in the drawings) holds the assembly of plates together during operation.

The dispenser 10 is mounted on a hopper and fed with fluent material such as liquids or granular material for discharge. The shaft 18 may be rotated by a ground engaging wheel or by some other motive source. It will be appreciated that there may be unequal numbers of orifices in the first and second plates which would give similar results. The greater the number of openings the more uniform the outflow of material.

- 7 -                    0176285

CLAIMS:

1.

A dispenser for fluent materials characterised in including a first plate having a plurality of orifices communicating with a hopper, a second plate having a plurality of orifices out of register with the orifices of the first plate and an intermediate member having a different number of orifice than the first or second plates, and which on relative movement of the member on the one hand and the two plates on the other hand, receive the material when one or more of its orifices registers completely or partially with one or more orifices of the first plate and discharge the material through one or more orifices of the second plate when in register therewith but out of register with any orifice in the first plate.

2.

A dispenser according to claim 1 characterised in that the first and second plates are fixed and the intermediate member is rotatable.

3.

A dispenser according to claim 1 or claim 2 characterised in that the first and second plates and the intermediate member are discs having sector shaped openings, the openings of the first and second plates always being out of register and the number of openings of the intermediate member being different from the number of openings in the first or second plates.

4.

A dispenser according to any one of claims 1 to 3 characterised in that a cut off plate is provided in association with the first plate, the cut off plate having openings arranged for complete or partial or no obturation of the openings of the first plate on relative rotative location thereof.

FIG 1

2/2

0176285

FIG 2(a)

FIG 2(b)

FIG 2(c)

FIG 2(d)